# EUROPÄISCHE PATENTSCHRIFT

(11) **EP 3 330 587 B1**
(45) Veröffentlichungstag und Bekanntmachung des Hinweises auf die Patenterteilung: **01.07.2020**
(21) Anmeldenummer: 17202257.6
(22) Anmeldetag: 17.11.2017
(51) Int. Cl.: F16L 21/03, F16L 17/025

(54) **ROHRVERBINDUNG MIT EINER RINGDICHTUNG ZUR VERWENDUNG IN EINER RINGSICKE EINES AUSSENROHRES ZUM ABDICHTEN DES AUSSENROHRES**
PIPE JOINT WITH AN ANNULAR SEAL FOR USE IN A GROOVE OF AN EXTERNAL PIPE FOR SEALING THE EXTERNAL PIPE
RACCORD DE TUYAUX AVEC UN JOINT D'ÉTANCHÉITÉ ANNULAIRE DESTINÉ À ÊTRE UTILISÉ DANS UNE RAINURE ANNULAIRE D'UN TUBE EXTÉRIEUR POUR ÉTANCHÉIFIER LE TUBE EXTÉRIEUR

(30) Priorität: 30.11.2016 DE 102016123157
(43) Veröffentlichungstag der Anmeldung: 06.06.2018
(73) Patentinhaber: LWM Werkzeug- und Maschinenbau GmbH, 49377 Vechta (DE)
(72) Erfinder: Lamping, Alwin, 49393 Lohne (DE)
(74) Vertreter: Jabbusch, Matthias

(56) Entgegenhaltungen:
- EP-A1- 1 840 436
- EP-A1- 2 366 933
- CH-A5- 633 871
- DE-A1-102012 019 930
- DE-U1-202004 016 334
- GB-A- 1 574 434
- US-A- 3 879 067

## Beschreibung

Die Erfindung betrifft eine Rohrverbindung mit einem Außenrohr mit einer Ringsicke und einem Innenrohr, das teilweise in das Außenrohr eingeschoben ist, und die im Bereich der Ringsicke überlappen, mit den Merkmalen des Oberbegriffs des Patentanspruchs 1. Weiterhin betrifft die Erfindung eine Ringdichtung zur Verwendung in einer solchen Rohrverbindung.

Eine gattungsgemäße Rohrverbindung mit einem Außenrohr mit einer Ringsicke und einer Ringdichtung zur Verwendung in der Ringsicke des Außenrohres zum Abdichten des Außenrohres gegenüber einem in das Außenrohr einzuschiebenden Innenrohr ist aus der DE 20 2014 004 538 U1 bekannt. In Einschubrichtung gesehen ist die Ringdichtung derart ausgestaltet, dass auf dem Grundkörper vor der Dichtlippe, d.h. im Querschnitt gesehen auf der Seite, von der das Innenrohr eingeschoben wird, eine Reinigungslippe angeordnet ist, die ebenfalls über den Grundkörper hinaussteht und in den Ringspalt hineinragt und dabei eine Reinigungsfunktion ausübt.

Aus der US 3,879,067 A ist ein Mannloch mit einer Ausnehmung zur Aufnahme eines Rohrs bekannt, wobei in die Ausnehmung eine Dichtung eingegossen ist.

Aus der DE 10 2012 019 930 A1 ist eine Ringdichtung für eine Steckmuffenverbindung bekannt. Die Ringdichtung hat einen Grundkörper und einen Dichtungskeil. Die Besonderheit dieser Dichtung besteht in einem Hohlraum, der eine Verschiebung des Dichtungskeils gegenüber dem Grundkörper ermöglicht.

Aus der GB 1 574 434 A ist eine Dichtung zur Abdichtung in einem Rohr beschrieben, wobei die Dichtung mit einem Verschlussring auf einer Hülse festgeklemmt wird. Ein radialer äußerer Bereich wird auf der Hülse mit dem Verschlussring festgeklemmt.

Ein Anschlussstück für Metallrohre ist in der EP 2 366 933 A1 beschrieben. Das Anschlussstück weist dabei eine mindestens dreistufige Dichtung mit einem Ohrring, einem Klemmring und einer Lippendichtung auf. Die Lippendichtung ist in einer umlaufenden Ausnehmung mit trapezförmigem Querschnitt ausgebildet, welcher sich in Einschubrichtung erweitert. Die Lippendichtung ist im Querschnitt im Wesentlichen V-förmig mit einer inneren Lippe, wobei die innere Lippe eine Stufe aufweist.

Ein Rohrleitungsfitting mit einer Kombination aus einem O-Ring-Dichtungsabschnitt und einem Lippendichtungsabschnitt ist aus der EP 1 840 436 A1 bekannt. Dabei wird ein Konusteil zur Herstellung der Verbindung in ein Gehäuse eingeschraubt.

Die DE 20 2004 016 334 U1 beschreibt einen Runddichtring zum Einsetzen in eine Umfangsnut eines Rohres. Der Runddichtring weist einen Dichtungsring und einen Stützring auf. Einschubseitig ist der Grundkörper der Dichtung mit einem Stützring aus einem deutlich härteren Material, insbesondere einem steifen Kunststoff, versehen, der den eigentlichen Dichtungsring aus dem weicheren Gummimaterial abstützt.

In der CH 633 871 ist ein Querschnitt durch eine Dichtung dargestellt, deren genauer Einsatzzweck unklar ist. Wesentlich ist für diese Dichtung, dass Verstärkungsringe, insbesondere Metalldrähte, in dem elastomeren Dichtungsmaterial vorhanden sind. Die Anzahl dieser Verstärkungsringe kann in Abhängigkeit von der Größe der Dichtung verändert und angepasst werden. Derartige Ringdichtungen sind seit vielen Jahren bekannt. So ist beispielsweise schon im deutschen Gebrauchsmuster G 83 36 475 eine entsprechende Ringdichtung beschrieben. Man spricht hier auch von einer Muffenrohrverbindung. Das eine Rohrende ist dabei gegenüber dem anderen Rohrende aufgeweitet, so dass von einem zweiten Rohr das Rohrende mit dem kleineren Rohrende in das Rohrende mit größerem Durchmesser des ersten Rohres eingeschoben werden kann. Im Bereich des Rohrendes mit größerem Durchmesser ist eine nach innen offene Nut oder Ringsicke vorgesehen, in die eine umlaufende Ringdichtung eingelegt wird, die den Ringspalt zwischen den beiden Rohrenden abdichtet. Die Ringdichtung weist dabei einen Grundkörper auf, der im montierten Zustand im Wesentlichen innerhalb der Ringsicke angeordnet ist und außerdem eine radial umlaufende Dichtlippe aufweist, die im eingebauten Zustand über die Ringsicke hinaussteht. Das zweite Rohr mit dem kleineren Durchmesser wird in das erste Rohr mit dem größeren Durchmesser eingeschoben und läuft dabei auf die radial umlaufende Dichtlippe auf, die dabei umgebogen und zusammengepresst wird und dadurch zur dichtenden Anlage an das eingeschobene Innenrohr kommt.

Der Erfindung liegt die Aufgabe zugrunde, eine Rohrverbindung mit einem Außenrohr mit einer Ringsicke und einer Ringdichtung zur Verwendung in der Ringsicke des Außenrohres der eingangs genannten Art zu schaffen, bei dem ein besonders zuverlässiger Sitz der Ringdichtung möglich ist.

Die Lösung dieser Aufgabe erfolgt mit einer Rohrverbindung mit den Merkmalen des Patentanspruchs 1.

Bei einer Rohrverbindung mit einem Außenrohr mit einer Ringsicke und einem Innenrohr, das teilweise in das Außenrohr eingeschoben ist, und die im Bereich der Ringsicke überlappen, wobei in der Ringsicke eine Ringdichtung angeordnet ist, die ein Ringspalt zwischen Außenrohr und Innenrohr abdichtet, besteht die Ringdichtung nur aus einem Grundkörper, der im Wesentlichen in der Ringsicke positionierbar ist, und eine von dem Grundkörper ausgehende radialumlaufende Dichtlippe aufweist, die im eingebauten Zustand über die Ringsicke hinaussteht und zur Dichte in Anlage an das Innenrohr bestimmt ist. Der Grundkörper der Ringdichtung weist im Querschnitt gesehen, auf der Seite, von der das Innenrohr eingeschoben wird, ein zum Innenrohr gerichtetes Widerlager auf, wobei das Widerlager ein nach oben konvex geformtes Profil aufweist, das heißt nach radial innen konvex geformt ist, und wobei das konvex geformte Profil im Querschnitt gesehen von der Dichtlippe durch einen Steigungswechsel, nämlich einen Vorzeichenwechsel der Steigung, im Querschnitt getrennt ist. Der höchste Punkt des Widerlagers ist im eingebauten, durch das Innenrohr unbeaufschlagten Zustand innerhalb der Ringsicke. Demgegenüber ist der höchste Punkt des Widerlagers im eingebauten, durch das Innenrohr beaufschlagten Zustand, gegen das Innenrohr gedrückt. Zusätzlich weist das Widerlager im Querschnitt gesehen auf der Seite, von der das Innenrohr eingeschoben wird, eine zweite konvexe Wölbung auf, die auf die Seitenwand der Ringsicke ausgerichtet ist, wobei die konvexe Wölbungsform bis zu einem Fuß des Grundkörpers ausgebildet ist und wobei zwischen dem Grundkörper und der Wand der Ringsicke ein Freiraum verbleibt.

Die Trennung ist als räumliche Abgrenzung zu verstehen. Es ist also zumindest in der Profilbetrachtung, also zumindest in der Betrachtung des seitlichen Profils der Ringdichtung, eine Art von Unterbrechung zwischen dem Widerlager und der Dichtlippe vorhanden. Das Widerlager verhindert mit seinem nach oben konvex geformten Profil ein Verdrehen oder Eindrehen der Ringdichtung. Man spricht hier auch von einem "Rollen" der Ringdichtung, das durch die Materialanhäufung in dem konvex geformten Profil des Widerlagers verhindert wird. Typischerweise wird nämlich spätestens in dem Moment, wenn das Innenrohr eingeschoben wird und auf die Dichtlippe trifft, die Ringdichtung zu einer Drehbewegung veranlasst. Diese wird also durch die erfindungsgemäße Ringdichtung mit dem Widerlager unterdrückt, da sich das Widerlager gegen das Innenrohr legt und das Rollen der Ringdichtung verhindert.

Die Trennung von Widerlager und Dichtlippe erfolgt erfindungsgemäß durch einen Steigungswechsel im Profil. Ausgehend von der Einschubseite in der Ringdichtung ist das Profil im Bereich des Widerlagers erst ansteigend, hat also eine positive Steigung, nach Überschreiten des Höhepunkts des Widerlagers eine negative Steigung und durchläuft dann einen Tiefpunkt und hat im Bereich der ansteigenden Flanke der Dichtlippe wieder eine positive Steigung. Im Bereich dieses Tiefpunktes erfolgt also insofern ein Vorzeichenwechsel der Steigung. Dies stellt die Trennung zwischen Widerlager und Dichtlippe dar. Bevorzugt handelt es sich dabei um einen unstetigen Steigungswechsel, also um einen scharfen Knick. Alternativ kann auch ein stetiger Steigungswechsel, also eher in Form einer Rundung erfolgen.

Der höchste Punkt des Widerlagers ist im eingebauten jedoch unbeaufschlagten Zustand erfindungsgemäß innerhalb der Ringsicke, so dass sichergestellt ist, dass das Innenrohr über das Widerlager beim Einführen hinweggleitet und das Widerlager erst nach Auftreffen des Innenrohres auf die Dichtlippe dann gegen das Innenrohr gedrückt wird. Alternativ könnte das Widerlager auch minimal aus der Ringsicke herausragen, da zwischen Innenrohr und Außenrohr natürlicherweise ein gewisses Spiel vorhanden ist.

Erfindungsgemäß weist das Widerlager im Profil gesehen auf der Seite, von der das Innenrohr eingeschoben wird, eine konvexe Wölbung auf. Es handelt sich insofern um eine zweite konvexe Wölbung, nämlich neben der ersten, nach oben gerichteten Wölbung ist eine insofern nach vorne auf die Seitenwand der Ringsicke ausgerichtete zweite konvexe Wölbung vorgesehen. Diese ist insbesondere auch im unteren Bereich, insbesondere in der unteren Hälfte ausgebildet. Insbesondere ist diese konvexe Wölbung bevorzugt derart ausgebildet, dass der am weitesten vorstehende Punkt der Wölbung im oberen Bereich liegt, jedoch die konvexe Wölbungsform durchgehend bis zu einem Fuß des Grundkörpers ausgebildet ist. Die Vorderseite weist innerhalb der Ringsicke insofern bevorzugt ausschließlich eine durchgehende konvexe Wölbung auf, die auf die Seitenwand der Ringsicke gerichtet ist.

In einer besonders bevorzugten Weiterentwicklung der Erfindung ist zwischen dem Widerlager und der Dichtlippe eine zusätzliche Dichtspitze angeordnet. Diese Dichtspitze ist niedriger als die Dichtlippe, jedoch höher als das Widerlager, ragt also über den Grundkörper hinaus und kommt beim Einschieben des Innenrohres mit dem Innenrohr in Kontakt. Bevorzugt weist die Dichtspitze zur Seite des Widerlagers eine erste Flanke und zur Seite der Dichtlippe eine zweite Flanke auf, wobei die erste Flanke länger ist als die zweite Flanke.

Die Dichtlippe weist eine besondere Ausgestaltung auf. Die Spitze der Dichtlippe ist bezogen auf eine Winkelhalbierende bevorzugt asymmetrisch, weist nämlich rückseitig eine Abschrägung auf. Die Dichtlippe und die Abschrägung sind dabei so dimensioniert, dass diese Abschrägung beim Umlegen der Dichtlippe im Bereich der oberen Kante der Ringsicke anliegt und dort besser eingleitet. Es werden dadurch sogenannte Muffenquetscher vermieden. Die Dichtung rutscht besser in die Ringsicke hinein. Weiterhin weist die Dichtlippe bevorzugt auf der Seite, die der Einschubseite des Innenrohres gegenüberliegend ist, eine Rückenstütze auf. In dem Übergangsbereich zwischen Dichtlippe und Grundkörper ist hier auf der Rückseite eine positive Materialansammlung vorgesehen. Insbesondere ist hier keine Hinterschneidung vorgesehen, so wie dies im Stand der Technik oftmals der Fall ist. Dadurch wird ein besonders gutes Dichtverhalten der Dichtlippe nach Einschub des Innenrohrs erreicht. Diese Rückenstütze ist bevorzugt über mehr als ein Drittel der freien Höhe der Dichtlippe ausgebildet. Die freie Höhe der Dichtlippe wird dabei auf dieser rückseitigen Seite der Dichtlippe von der Oberseite des Grundkörpers bis zur Spitze der Dichtlippe gerechnet.

Größenmäßig ist die Ringdichtung derart ausgebildet, dass der Mittelpunkt der Dichtspitze bezogen auf die Gesamtbreite der Ringdichtung von 1 bei etwa 0,35 bis 0,45 positioniert ist. Besonders bevorzugt ist der Mittelpunkt der Dichtspitze bei etwa 0,4 bzw. 0,38 bis 0,42 positioniert. Demgegenüber ist der Mittelpunkt der Dichtlippe bezogen auf die Gesamtbreite der Ringdichtung von 1 bei etwa 0,7 bis 0,8, bevorzugt bei etwa 0,73 bis 0,77 positioniert. Das Widerlager befindet sich demgegenüber am Anfang der Ringdichtung und ist nicht so wie die Dichtspitze und die Dichtlippe auf einen zentralen Punkt festlegbar, sondern befindet sich in ihrer Gesamtbreite bei etwa 0 bis 0,2 der Ringdichtung, wenn man diese auf 1 normiert.

Ein weiterer Aspekt der Erfindung betrifft eine Rohrverbindung mit einem Außenrohr mit einer Ringsicke und einem Innenrohr, das teilweise in das Außenrohr eingeschoben ist, und die im Bereich der Ringsicke überlappen, wobei in der Ringsicke eine Ringdichtung angeordnet ist, die einen Ringspalt zwischen Außenrohr und Innenrohr abdichtet, wobei das Außenrohr mit der Ringdichtung dem oben beschriebenen entspricht.

Nachfolgend wird die Erfindung anhand eines in der Zeichnung dargestellten Ausführungsbeispiels weiter erläutert. Im Einzelnen zeigen die schematischen Darstellungen in:
- Figur 1:: einen Querschnitt durch ein Außenrohr mit eingelegter Ringdichtung und anfänglich eingeschobenem Innenrohr;
- Figur 2:: einen Teil des Außenrohrs mit der Ringdichtung mit etwas weiter eingeschobenem Innenrohr im Profil;
- Figur 3:: einen Teil des Außenrohrs mit der Ringdichtung mit etwas weiter eingeschobenem Innenrohr im Profil;
- Figur 4:: einen Teil des Außenrohrs mit der Ringdichtung mit etwas weiter eingeschobenem Innenrohr im Profil;
- Figur 5:: die geschnittene Ringdichtung in dreidimensionaler Andeutung.

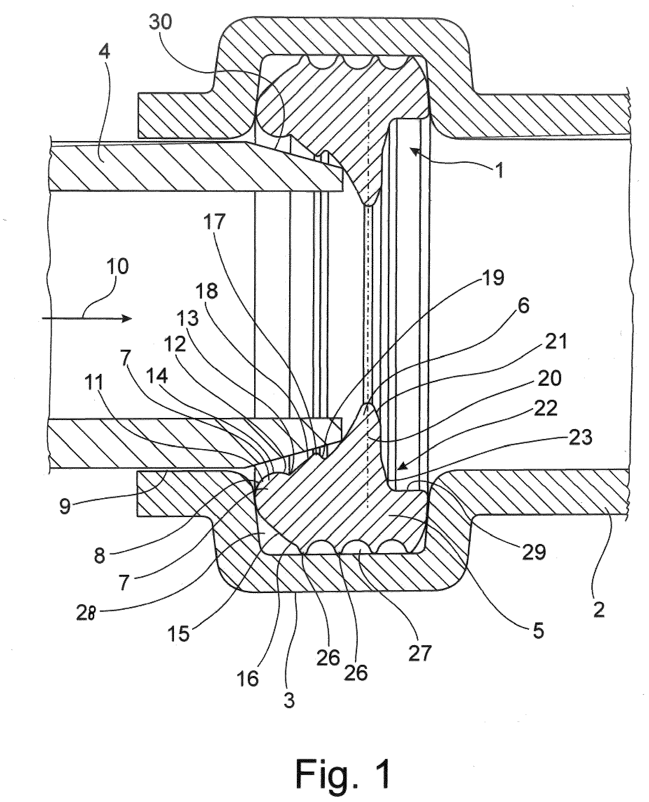

In Figur 1 ist eine Ringdichtung 1 in einem Außenrohr 2 dargestellt, wobei das Außenrohr 2 in seinem Endbereich eine umlaufende Ringsicke 3 aufweist, in der die Ringdichtung 1 angeordnet ist. An seinem gegenüberliegenden, hier nicht dargestellten Endbereich wird das Außenrohr 2 schmaler und hat dort einen im Vergleich zum Außenrohr 2 verjüngten Bereich und bildet ein Innenrohr 4 aus. Dies würde dem hier von links hereinragenden Rohr entsprechen. Dieses Innenrohr 4 wird in Einschubrichtung 10, die durch den entsprechenden Pfeil dargestellt ist, in das Außenrohr 2 eingeschoben. Typischerweise weist dieses Innenrohr 4 einen vorderen Schrägbereich oder eine Fase 30 auf, die das Einschieben erleichtern soll. Um das Einschieben überhaupt zu ermöglichen, sind gewisse Größentoleranzen vorgesehen, so dass ein Ringspalt 9 zwischen Außenrohr 2 und Innenrohr 4 verbleibt. Um einen sicheren und abgedichteten Sitz des Innenrohrs 4 in dem Außenrohr 2 zu gewährleisten, ist eine umlaufende Ringdichtung 1 vorgesehen, die in die Ringsicke 3 eingelegt wird. Die Ringdichtung 1 weist im Wesentlichen einen Grundkörper 5 auf, der sich innerhalb der Ringsicke 3 befindet oder in dieser anordbar ist. Aus dem Grundkörper 5 erhebt sich eine Dichtlippe 6, die über die Ringsicke 3 hinaussteht und dann von dem Innenrohr 4 erfasst wird und letztlich die Abdichtung bewirkt. Im in Einschubrichtung 10 des Innenrohrs 4 gesehen vorderen Teil der Ringdichtung 1 ist hier erfindungsgemäß ein Widerlager 7 mit einer positiven Materialanhäufung, insbesondere einem nach oben, also in Richtung des einzuschiebenden Innenrohrs 4 gerichteten konvexen Profil 8 vorgesehen. Dieses konvexe Profil 8 ist von der Einschubrichtung 10 aus gesehen zunächst bei Betrachtung allgemein der Kontur oder des Profils 16 der Ringdichtung 1 zunächst mit einer positiven Steigung 11 ausgebildet, die bis zum höchsten Punkt 14 des konvexen Profils 8 des Widerlagers 7 besteht. Danach fällt das Profil 16 ab und es liegt insofern eine negative Steigung 12 vor. Am Punkt 13 erfolgt ein Steigungswechsel zu der dann positiven Steigung 11 des nächsten Abschnitts. Hier liegt sozusagen eine Trennung zwischen dem Widerlager 7 und der Dichtlippe 6 vor. Im vorliegenden Fall ist diese Trennung oder Abgrenzung durch einen unstetigen Steigungswechsel im Punkt 13 ausgebildet. Im hier dargestellten Ausführungsbeispiel ist die Dichtlippe 6 durch eine zusätzliche Dichtspitze 17 ergänzt, die ebenfalls über die Ringsicke 3 hinaussteht und beim Einschieben durch das Innenrohr 4 erfasst wird. Die Dichtspitze 17 hat eine erste Flanke 18 und eine zweite Flanke 19, wobei die erste Flanke 18 länger ist als die zweite Flanke 19. Die Dichtspitze 17 ist insgesamt wesentlich niedriger als die Dichtlippe 6. Im Übergang zwischen Dichtspitze 17 und Dichtlippe 6 ist ebenfalls ein tiefster Punkt vorgesehen, der sich an die zweite Flanke 19 mit negativer Steigung anschließt, bevor daraufhin wieder eine positive Flanke zur Dichtlippe 6 folgt. Die Begriffe positive Steigerung und negative Steigerung sind auf die Einschubrichtung 10 entsprechend der Figur bezogen. Die Dichtlippe 6 selbst ist in dem erfindungs-gemäßen Ausführungsbeispiel asymmetrisch, insbesondere bezüglich einer in der Dichtlippe 6 gedachten Winkelhalbierenden 20 ausgebildet. Insbesondere ist auf der bezogen auf die Einschubrichtung 10 rückseitigen Seite der Dichtlippe 6 eine Abschrägung 21 vorhanden, die mit dem in Einschubrichtung 10 gesehen endseitigen Ende der Ringsicke 3 korrespondiert. Auf der Rückseite 22 der Dichtlippe 6 ist eine Rückenstütze 23 vorgesehen, die auch als positive Materialansammlung verstanden werden kann und sich über etwa ein Drittel der freien Höhe der Dichtlippe 6 erstreckt. Unter der freien Höhe der Dichtlippe 6 wird dabei der Abstand vom Auflagebereich 29 auf der Oberseite des Grundkörpers 5 bis zur Spitze der Dichtlippe 6 verstanden. Im unteren Bereich weist die Ringdichtung 1 vier Füße 26 mit drei dazwischen angeordneten Ausnehmungen 27 auf. Der untere Bereich der Ringdichtung 1 bedeutet hier der in der Ringsicke 3 umlaufende, nach außen gerichtete Bereich, der in der Zeichnung unten ist. Im eingebauten Zustand ist dies der nach außen weisende Bereich der Ringdichtung 1, die in der umlaufenden Ringsicke 3 eingelegt ist. In der Ringsicke 3 verbleibt einschubseitig gesehen ein Freiraum 28, der von der Ringdichtung 1 begrenzt wird. Die Ringdichtung 1 weist in diesem einschubseitigen Bereich auch nach vorne ein konvexes Profil 15 auf, das sich durchgehend bis zu den Füßen 26 erstreckt. Insgesamt ist einmal im oberen Bereich des Widerlagers 7 eine Materialansammlung mit einem nach oben gerichteten konvexen Profil 8 mit einem höchsten Punkt 14 und einem übergangslos daran anschließenden direkt zur Einschubseite gegen die Wand der Ringsicke 3 gerichteten zweiten konvexen Profil 15 vorgesehen, das im oberen Bereich seinen am weitesten vorstehenden Punkt hat, der an der Wand der Ringsicke 3 anliegt. Nach unten setzt sich die konvexe Form bis zu dem ersten Fuß 26 fort.

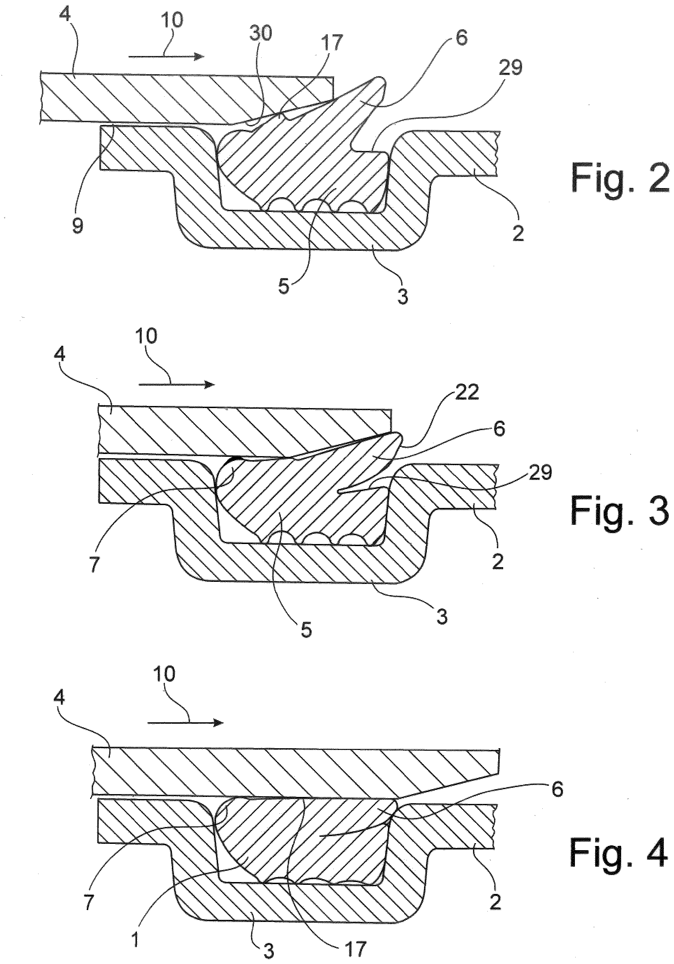

In Figur 2 ist nur noch die untere Hälfte des Rohres im Schnitt dargestellt, wobei also ein Ausschnitt des Außenrohres 2 mit der Ringsicke 3 und das Innenrohr 4 dargestellt ist, wobei zwischen dem Außenrohr 2 und dem Innenrohr 4 der umlaufende Ringspalt 9 verbleibt. Gegenüber der Figur 1 ist das Innenrohr 4 ein Stück weiter vorgeschoben und die Fase 30 des Innenrohres 4 läuft auf die Dichtlippe 6 und die Dichtspitze 17 auf. Unter dem Druck des in Einschubrichtung 10 bewegten Innenrohres 4 verformt sich die Dichtlippe 6 und knickt ab in Richtung des Auflagebereichs 29 des Grundkörpers 5 der Ringdichtung 1.

Die Figur 3 entspricht insoweit der Figur 2, jedoch ist hier das Innenrohr 4 noch ein Stück weiter eingeschoben, so dass die Dichtlippe 6 hier deutlich weiter umgeknickt ist und schon nahezu auf dem Auflagebereich 29 des Grundkörpers 5 aufliegt. Durch den von dem Innenrohr 4 auf den in Einschubrichtung 10 hinteren Teil der Ringdichtung 1 ausgeübten Druck neigt die Ringdichtung 1 zum Rollen und der einschubseitig vordere Teil mit dem Widerlager 7 wird nach oben gedrückt. Das Widerlager 7 kann sich dabei gegen das Innenrohr 4 legen und verhindert ein Rollen der Ringdichtung 1.

Dieser positive Effekt verstärkt sich noch, wenn, was häufig vorkommt, das Innenrohr 4 nicht absolut gerade in das Außenrohr 2 eingeschoben wird, sondern etwas verkanntet ist oder aufgrund von Rohrlängenanpassungen die Fase 30 fehlt, wenn das Rohr in der Länge gekürzt wurde. Insbesondere in solchen Fällen trifft die vordere Ecke dann beim verkanteten Einführen im Bereich der Dichtspitze 17 auf die Ringdichtung 1 und würde zu einem starken Rollen führen, wenn nicht das erfindungsgemäße Widerlager 7 die Ringdichtung 1 in ihrer Position in der Ringsicke 3 halten würde.

In Figur 4 ist das Innenrohr 4 in Einschubrichtung 10 so weit eingeschoben, dass das Innenrohr 4 die Ringsicke 3 des Außenrohrs 2 vollständig überdeckt. Die Ringdichtung 1 liegt jetzt vor allem mit der Dichtlippe 6 aber auch der Dichtspitze 17 eng an dem Innenrohr 4 an und überbrückt den Ringspalt 9, so dass eine geschlossene Dichtung ausgebildet wird. Durch den Druck im Bereich der Dichtlippe 6 wird auch der eingangsseitige Bereich der Ringdichtung 1 angehoben, so dass das Widerlager 7 ebenfalls an dem Innenrohr 4 anliegt.

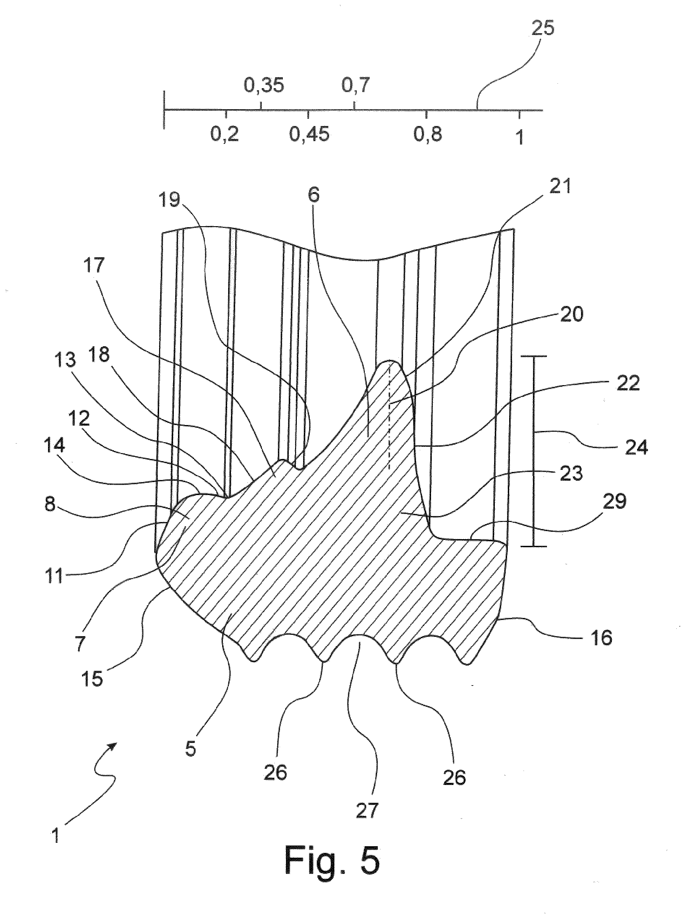

In Figur 5 ist ein Querschnitt durch die Ringdichtung 1 in einer teilperspektivischen Ansicht dargestellt. Gleiche Teile sind mit gleichen Bezugs-zeichen gekennzeichnet. In Figur 5 ist außerdem die Breite 25 der Ringdichtung 1 dargestellt. Dazu ist eine Skala von 0 bis 1 aufgetragen, die der Breite der Ringdichtung 1 zugeordnet ist. Im einschubseitigen Bereich von 0 bis 0,2 erstreckt sich das Widerlager 7. Die Dichtspitze 17 befindet sich insbesondere mit ihrem spitzen Bereich bei einer Breite zwischen 0,35 und 0,45. Die Dichtlippe 6 befindet sich im Bereich zwischen 0,7 und 0,8. Insbesondere befindet sich dort die Spitze der Dichtlippe 6. Der Auflagebereich 29 liegt im Bereich 0,8 bis 1. Das konvexe Profil 15 erstreckt sich in einem Bereich von 0 bis 0,2. Der erste Fuß 26 ist daher erst im Bereich zwischen 0,2 und 1 insbesondere im Bereich zwischen 0,25 und 1 angeordnet. Weiterhin ist hier auch die freie Höhe 24 dargestellt, die sich von dem Auflagebereich 29 bis zur Spitze der Dichtlippe 6 erstreckt. Die Rückenstütze 23 erstreckt sich hier über bevorzugt mehr als ein Drittel dieser freien Höhe 24.

## Patentansprüche

1. Rohrverbindung mit einem Außenrohr (2) mit einer Ringsicke (3) und einem Innenrohr (4), das teilweise in das Außenrohr (2) eingeschoben ist, und die im Bereich der Ringsicke (3) überlappen, wobei in der Ringsicke (3) eine Ringdichtung (1) angeordnet ist, die einen Ringspalt (9) zwischen Außenrohr (2) und Innenrohr (4) abdichtet,
wobei die Ringdichtung (1) nur aus einem Grundkörper (5) besteht, der im Wesentlichen in der Ringsicke (3) positionierbar ist, und eine von dem Grundkörper (5) ausgehende, radial umlaufende Dichtlippe (6) aufweist, die im eingebauten Zustand über die Ringsicke (3) hinaussteht und zur dichtenden Anlage an das Innenrohr (4) bestimmt ist,
wobei der Grundkörper (5) der Ringdichtung (1) im Querschnitt gesehen auf der Seite, von der das Innenrohr (4) eingeschoben wird, ein zum Innenrohr gerichtetes Widerlager (7) aufweist, wobei das Widerlager (7) ein nach oben konvex geformtes Profil (8) aufweist, das heißt nach radial innen konvex geformt, wobei das konvex geformte Profil (8) im Querschnitt (16) gesehen von der Dichtlippe (6) durch einen Steigungswechsel (13), nämlich einen Vorzeichenwechsel der Steigung, im Querschnitt (16) getrennt ist,
wobei der höchste Punkt (14) des Widerlagers (7) im eingebauten, durch das Innenrohr (4) unbeaufschlagten Zustand innerhalb der Ringsicke (3) ist,
wobei der höchste Punkt (14) des Widerlagers (7) im eingebauten, durch das Innenrohr (4) beaufschlagten Zustand gegen das Innenrohr (4) gedrückt ist, und wobei das Widerlager (7) im Querschnitt (16) gesehen auf der Seite, von der das Innenrohr (4) eingeschoben wird, eine zweite konvexe Wölbung (15) aufweist, die auf die Seitenwand der Ringsicke (3) ausgerichtet ist, wobei die konvexe Wölbungsform der zweiten konvexen Wölbung (15) bis zu einem Fuß des Grundkörpers (5) ausgebildet ist, wobei zwischen dem Grundkörper (5) und der Wand der Ringsicke (3) ein Freiraum (28) verbleibt.

2. Rohrverbindung nach einem der vorhergehenden Ansprüche, **dadurch gekennzeichnet, dass** zwischen dem Widerlager (7) und der Dichtlippe (6) eine zusätzliche Dichtspitze (17) angeordnet ist.

3. Rohrverbindung nach Anspruch 2, **dadurch gekennzeichnet, dass** die Dichtspitze (17) zur Seite des Widerlagers (7) eine erste Flanke (18) und zur Seite der Dichtlippe (6) eine zweite Flanke (19) aufweist und dass die erste Flanke (18) länger ist als die zweite Flanke (19).

4. Rohrverbindung nach einem der vorhergehenden Ansprüchen, **dadurch gekennzeichnet, dass** die Spitze der Dichtlippe (6) bezogen auf eine Winkelhalbierende (20) asymmetrisch ist, nämlich rückseitig eine Abschrägung (21) aufweist.

5. Rohrverbindung nach einem der vorhergehenden Ansprüche, **dadurch gekennzeichnet, dass** die Dichtlippe (6) auf der Seite, die der Einschubseite des Innenrohres (4) gegenüberliegend ist, eine Rückenstütze (23) aufweist.

6. Rohrverbindung nach Anspruch 5, **dadurch gekennzeichnet, dass** die Rückenstütze (23) über mehr als ein Drittel der freien Höhe (24) der Dichtlippe (6) ausgebildet ist.

7. Rohrverbindung nach einem der Ansprüche 2 oder 3, **dadurch gekennzeichnet, dass** die Dichtspitze (17) bezogen auf die Gesamtbreite der Ringdichtung (1) von 1 bei etwa 0,35 bis 0,45 positioniert ist.

8. Rohrverbindung nach einem der Ansprüche 2 bis 7, **dadurch gekennzeichnet, dass** die Dichtlippe (6) bezogen auf die Gesamtbreite der Ringdichtung (1) von 1 bei etwa 0,7 bis 0,8 positioniert ist.

9. Rohrverbindung nach einem der vorhergehenden Ansprüche, **dadurch gekennzeichnet, dass** sich das Widerlager (7) bezogen auf die Gesamtbreite der Ringdichtung (1) von 1 bei etwa 0 bis 0,2 befindet.

## Claims

1. A pipe joint with an external pipe (2) with an annular groove (3) and an internal pipe (4), which is partially inserted into the external pipe (2), and which overlap in the area of the annular groove (3), wherein arranged in the annular groove (3) is an annular seal (1) which seals an annular gap (9) between the external pipe (2) and the internal pipe (4),
wherein the annular seal (1) solely comprises a basic body (5) which is essentially positionable in the annular groove (3) and has a radially circumferential sealing lip (6), originating from the basic body (5), which when mounted protrudes beyond the annular groove (3) and is intended for being in sealing contact with the inner pipe (4),
wherein seen in cross-section on the side from which the inner pipe (4) is inserted, the basic body (5) of the annular seal (1) has an abutment (7) directed towards the inner pipe, wherein the abutment (7) has a upwardly convex-shaped profile (8), i.e. convex-shaped radially inwards, wherein, seen in cross-section (16), the convexly-shaped profile (8) is separated from the sealing lip (6) by a change in pitch (13), namely a change of sign of the pitch, in cross-section (16),
wherein the highest point (14) of the abutment (7) in the assembled state when not being acted upon by the inner pipe (4) is within the annular groove (3),
wherein the highest point (14) of the abutment (7) in the assembled state when being acted upon by the inner pipe (4) is pressed against the inner pipe (4),
and wherein seen in cross-section (16), on the side from which the inner pipe (4) is inserted, the abutment (7) has a second convex curvature (15) directed towards the side wall of the annular groove (3), wherein the convexly curved shape of the second convex curvature (15) is formed up to foot of the basic body (5), wherein a free space (28) remains between the basic body (5) and the wall of the annular groove (3).

2. The pipe joint according to any one of the preceding claims **characterised in that** an additional sealing tip (17) is arranged between the abutment (7) and the sealing lip (6).

3. The pipe joint according to claim 2 **characterised in that** the sealing tip (17) on the side facing the abutment (7) has a first flank (18) and on the side facing the sealing lip (6) has a second flank (19) and **in that** the first flank (18) is longer than the second flank (19).

4. The pipe joint according to any one of the preceding claims **characterised in that** the tip of the sealing lip (6) is asymmetrical in relation to a bisecting line (20), namely having a bevel (21) on the rear side.

5. The pipe joint according to any one of the preceding claims **characterised in that** on the side opposite the insertion side of the inner pipe (4), the sealing lip (6) has a back support (23).

6. The pipe joint according to claim 5 **characterised in that** the back support (23) is provided over more than one third of the free height (24) of the sealing lip (6) .

7. The pipe joint according to any one of claims 2 or 3 **characterised in that** in relation to the total width of the annular seal (1) of 1, the sealing tip (17) is positioned at around 0.35 to 0.45.

8. The pipe joint according to any one of claims 2 to 7 **characterised in that** in relation to the total width of the annular seal (1) of 1, the sealing lip (6) is positioned at around 0.7 to 0.8.

9. The pipe joint according to any one of the preceding claims **characterised in that** in relation to the total width of the annular seal (1) of 1, the abutment (7) is located at around 0 to 0.2.

## Revendications

1. Raccord de tubes, pourvu d'un tube extérieur (2) muni d'une rainure annulaire (3) et d'un tube intérieur (4) qui est partiellement emboîté dans le tube extérieur (2) et qui se chevauchent dans la région de la rainure annulaire (3), dans la rainure annulaire (3) étant placé un joint annulaire (1) qui assure l'étanchéité d'une fente annulaire (9) entre le tube extérieur (2) et le tube intérieur (4),
le joint annulaire (1) étant uniquement constitué d'un corps de base (5) qui est essentiellement positionnable dans la rainure annulaire (3) et comporte une lèvre d'étanchéité (6) circonférentielle en direction radiale, partant du corps de base (5), qui en position montée déborde par-dessus la rainure annulaire (3) et qui est destinée pour s'appuyer en assurant l'étanchéité sur le tube intérieur (4),
vu en section transversale sur le côté à partir duquel on emboîte le tube intérieur (4), le corps de base (5) du joint annulaire (1) comportant une butée (7) dirigée vers le tube intérieur, la butée (7) comportant un profil (8) façonné de forme convexe vers le haut, c'est-à-dire façonné de forme concave vers l'intérieur, en direction radiale, vu en section transversale (16), le profil (8) façonné de forme convexe étant séparé dans la section transversale (16) de la lèvre d'étanchéité (6) par un changement de pente (13), à savoir un changement de signe algébrique de la pente,
en position montée, non soumise par le tube intérieur (4), le point culminant (14) de la butée (7) se trouvant à l'intérieur de la rainure annulaire (3),
en position montée, soumise par le tube intérieur (4), le point culminant (14) de la butée (7) étant poussé contre le tube intérieur (4),
et vue en section transversale (16), la butée (7) comportant sur le côté à partir duquel on emboîte le tube intérieur (4) une deuxième cambrure (15) convexe, qui est dirigée vers la paroi latérale de la rainure annulaire (3), la forme cambrée convexe de la deuxième cambrure (15) convexe étant conçue jusqu'à un pied du corps de base (5), un espace libre (28) subsistant entre le corps de base (5) et la paroi de la rainure annulaire (3).

2. Raccord de tubes selon la revendication précédente, **caractérisé en ce qu'**entre la butée (7) et la lèvre d'étanchéité (6) est placée une pointe d'étanchéité (17) supplémentaire.

3. Raccord de tubes selon la revendication 2, **caractérisé en ce que** vers le côté donnant sur la butée (7), la pointe d'étanchéité (17) comporte un premier flanc (18) et sur le côté donnant sur la lèvre d'étanchéité (6), comporte un deuxième flanc (19) et **en ce que** le premier flanc (18) est plus long que le deuxième flanc (19) .

4. Raccord de tubes selon l'une quelconque des revendications précédentes, **caractérisé en ce que** la pointe de la lèvre d'étanchéité (6) est asymétrique par rapport à la bissectrice (20), à savoir comporte sur la face arrière un biseau (21).

5. Raccord de tubes selon l'une quelconque des revendications précédentes, **caractérisé en ce que** sur le côté qui et au vis-à-vis du côté d'emboîtement du tube intérieur (4), la lèvre d'étanchéité (6) comporte un soutien arrière (23).

6. Raccord de tubes selon la revendication 5, **caractérisé en ce que** le soutien arrière (23) est conçu sur plus d'un tiers de la hauteur libre (24) de la lèvre d'étanchéité (6).

7. Raccord de tubes selon l'une quelconque des revendications 2 ou 3, **caractérisé en ce que** la pointe d'étanchéité (17) est positionnée par rapport à la largeur totale du joint annulaire (1) de 1 à environ de 0,35 à 0,45.

8. Raccord de tubes selon l'une quelconque des revendications 2 à 7, **caractérisé en ce que** la lèvre d'étanchéité (6) est positionnée par rapport à la largeur totale du joint annulaire (1) de 1 à environ de 0,7 à 0,8.

9. Raccord de tubes selon l'une quelconque des revendications précédentes, **caractérisé en ce que** la butée (7) se trouve par rapport à la largeur totale du joint annulaire (1) de 1 à environ de 0 à 0,2.
